# EUROPEAN PATENT APPLICATION

(11) **EP 4 838 610 A1**
(43) Date of publication of application: **11.11.2026**
(21) Application number: 25747949.3
(22) Date of filing: 26.01.2025
(51) Int. Cl.: H01M 10/058, H01M 10/0525

(54) **BATTERY**

(30) Priority: 31.01.2024 CN 202410135989
(71) Applicant: Zhuhai CosMX Battery Co., Ltd., Zhuhai, Guangdong 519180 (CN)
(72) Inventor: ZHANG, Baohai, Zhuhai, Guangdong 519180 (CN); PENG, Chong, Zhuhai, Guangdong 519180 (CN); FANG, Shuangzhu, Zhuhai, Guangdong 519180 (CN)
(74) Representative: Murgitroyd & Company
(86) International application number: PCT/CN2025/075209
(87) International publication number: WO 2025/162385

(57) **Abstract**

The present disclosure relates to the field of batteries, and in particular to a battery. The battery includes a positive electrode plate and a negative electrode plate, where the positive electrode plate includes a first carbon nanotube, a surface of the negative electrode plate has a recess, and a ratio of a depth of the recess to a tube diameter of the first carbon nanotube ranges from 300 :1 to 5000 : 1. The battery of the present disclosure can effectively mitigate the lithium plating problem of the negative electrode plate, and has both high energy density and fast charging capability.

## Description

### TECHNICAL FIELD

The present disclosure relates to the field of batteries, and in particular relates to a battery.

### BACKGROUND

With the advent of the 5G era and the rapid development of lithium-ion battery technologies, people have put forward higher requirements for the energy density and fast charging capability of lithium-ion batteries. The development trend for consumer lithium-ion batteries is fast-charging lithium batteries with a high energy density. In order to increase the energy density, the related technologies usually involve increasing the thicknesses of the positive and negative electrode plates, which results in lithium ions easily accumulating on the surface of the negative electrode plate, causing congestion and thus seriously affecting the service life of lithium-ion batteries. In order to improve this situation, pores are usually punched on the surface of the negative electrode plate. In addition, in order to improve the fast charging capabilities, the related technologies usually use carbon nanotubes, which have more excellent conductivity, as a conductive agent. However, this will aggravate the lithium plating phenomenon on the surface of the negative electrode plate, and even if pores are punched on the surface of the negative electrode plate, the lithium plating problem cannot be effectively mitigated.

Therefore, it is very important to invent a battery which combines high energy density and fast charging capability with a low lithium plating risk.

### SUMMARY

An object of the present disclosure is to provide a battery to overcome the aforementioned problems in the prior art. The battery of the present disclosure can effectively mitigate the lithium plating problem of the negative electrode plate by defining the ratio of the tube diameter of the carbon nanotubes in the positive electrode plate to the depth of the recess on the negative electrode plate, thus enabling the battery to have both high energy density and fast charging capability.

The present disclosure provides a battery including a positive electrode plate and a negative electrode plate, where the positive electrode plate includes a first carbon nanotube, a surface of the negative electrode plate has a recess, and a ratio of a depth of the recess to a tube diameter of the first carbon nanotube ranges from 300 :1 to 5000 : 1.

By means of the technical solutions described above, the present disclosure has at least the following advantages over the prior art: in the battery of the present disclosure, a ratio of the tube diameter of the carbon nanotubes in the positive electrode plate to the depth of the recess on the negative electrode plate is defined, such that the lithium intercalation speed of the negative electrode plate matches the lithium deintercalation speed of the positive electrode plate, that is, the kinetic performance of the two can be balanced, thereby improving the lithium plating problem of the negative electrode plate.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### BRIEF DESCRIPTION OF THE DRAWINGS

FIG. 1 is a schematic view of a width of a groove in an example of the present disclosure.
FIG. 2 is a schematic view of a spacing between the grooves in an example of the present disclosure.
FIG. 3 is a schematic view of a morphology of a pore in an example of the present disclosure.
FIG. 4 is a schematic view of a groove in an example of the present disclosure.

### DETAILED DESCRIPTION OF THE EMBODIMENTS

Hereinafter, specific embodiments of the present disclosure will be described in detail. It should be understood that the specific embodiments described herein are only used to illustrate and explain the present disclosure and are not used to limit the present disclosure.

The present disclosure provides a battery, the battery may include a positive electrode plate and a negative electrode plate, where the positive electrode plate may include a first carbon nanotube, a surface of the negative electrode plate has a recess, and a ratio of a depth of the recess to a tube diameter of the first carbon nanotube may range from 300 :1 to 5000 : 1, for example, 300 : 1, 400 : 1, 500 : 1, 600 : 1, 700 : 1, 800 : 1, 900 : 1, 1000 : 1, 1100 : 1, 1200 : 1, 1300 : 1, 1400 : 1, 1500 : 1, 1600 : 1, 1700 : 1, 1800 : 1, 1900 : 1, 2000 : 1, 3000 : 1, 4000 : 1 or 5000 : 1.

In order to improve the energy density and fast-charging capability of a battery, related technologies usually increase the thickness of the electrode plates, and use carbon nanotubes, which have excellent conductivity, as a conductive agent; however, this will result in lithium ions accumulating on the surface of the negative electrode plate, leading to lithium plating and thus seriously affecting the service life of lithium-ion batteries. Even if pores are punched on the surface of the negative electrode plate, the lithium plating problem cannot be effectively mitigated. The inventors of the present disclosure have discovered through extensive researches that by controlling the tube diameter of the carbon nanotube in the positive electrode plate and the depth of the recess on the negative electrode plate, and making the ratio between the two meet a specific range, the problem of lithium plating on the negative electrode can be improved while enabling the battery to have both energy density and fast charging capability. The reasons are as follows. The provision of a recess on a surface of the negative electrode plate can improve the infiltration of an electrolyte to the negative electrode active material near the negative electrode current collector, shorten the transport distance of lithium ions, improve the kinetic performance of the negative electrode plate, and thereby improve the intercalation speed of lithium ions into the negative electrode plate. Moreover, carbon nanotubes enhance the conductivity in the positive electrode plate and have a certain capillary effect, which enables them to store electrolyte, thereby improving the infiltration effect of the electrolyte to the positive electrode plate, increasing the transport speed of lithium ions in the positive electrode plate, and improving the kinetic performance of the positive electrode plate. However, in this case, the kinetic performance of the positive electrode plate may not match that of the negative electrode plate. The kinetic performance of the positive electrode plate is better than that of the negative electrode plate, that is, the deintercalation speed of lithium ions from the positive electrode plate is greater than the intercalation speed of lithium ion into the negative electrode plate, which causes lithium ions to not be intercalated into the negative electrode plate in time, but instead accumulate on the surface of the negative electrode plate, causing congestion, which in turn leads to lithium plating. If the ratio of the tube diameter of the carbon nanotube in the positive electrode plate to the depth of the recess on the negative electrode plate is controlled such that the kinetic performance of the positive electrode plate can match that of the negative electrode plate, that is, the speed at which lithium ions are deintercalated from the positive electrode plate matches the speed at which lithium ions are intercalated into the negative electrode plate, the fast charging capability of the battery is significantly improved, and the problem of lithium plating on the negative electrode is further improved.

In an embodiment, the ratio of the depth of the recess to the tube diameter of the first carbon nanotube ranges from 600 :1 to 2050 : 1. When the ratio of the depth of the recess to the tube diameter of the first carbon nanotube ranges from 600 :1 to 2050 : 1, the kinetic performance of the positive electrode plate can be further matched to that of the negative electrode plate, thereby improving the fast charging capability of the battery and mitigating the lithium plating problem of the negative electrode plate.

In the present disclosure, the depth of the recess has the conventional meaning in the art, and the depth of the recess refers to the maximum value of the perpendicular distance from any point in the recess to the surface of the negative electrode plate. The depth of the recess can be measured by conventional methods in the art, for example, by a 3D profilometer, or by a scanning electron microscope (SEM). For example, the depth of the recess is measured by randomly selecting 20 recesss or selecting all recesss on the entire negative electrode plate, measuring the depth of each recess, and calculating the average.

In the present disclosure, the tube diameter of the first carbon nanotube may range from 2 nm to 20 nm, for example, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm or 20 nm.

In an embodiment, the tube diameter of the first carbon nanotube ranges from 6 nm to 16 nm.

Provided that the ratio of the depth of the recess to the tube diameter of the first carbon nanotube is within a specific range, when the tube diameter of the first carbon nanotube is within a specific range, it can not only improve the overall conductivity of the battery, but also avoid increasing the risk of lithium plating on the negative electrode. When the tube diameter of the first carbon nanotube is too small (for example, less than 2 nm), the capillary effect thereof is not significant and the carbon nanotube cannot store enough electrolyte, which will affect the lithium ion transport speed, reduce the kinetic performance of the positive electrode plate, and thus reduce the conductivity of the battery. When the tube diameter is too large (for example, greater than 20 nm), the capillary effect thereof is likewise not significant. Although sufficient electrolyte can be stored in comparison with cases where the tube diameter is too small, the excess electrolyte will aggravate the side reactions between the electrolyte and the positive electrode active material, thereby affecting the cycling capacity retention rate of the battery.

In the present disclosure, the tube diameter of the first carbon nanotube refers to the outer tube diameter of the first carbon nanotube, which can be obtained by conventional methods in the art, for example, by using SEM or transmission electron microscopy (TEM) via a length measuring tool to measure the outer tube diameter of the carbon nanotube, for example, selecting at least 20 carbon nanotubes in a range of 100 µm × 100 µm, measuring the outer tube diameter of each carbon nanotube, and calculating the average.

In the present disclosure, the depth of the recess may range from 5 µm to 65 µm, for example, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 35 µm, 40 µm, 45 µm, 50 µm, 55 µm, 60 µm or 65 µm.

In an embodiment, the depth of the recess ranges from 8 µm to 30 µm.

Provided that the ratio of the depth of the recess to the tube diameter of the first carbon nanotube is within a specific range, the depth of the recess within a specific range can not only improve the infiltration of the electrolyte to the negative electrode active material, thereby improving the intercalation and deintercalation speeds of lithium ions and improving the kinetic performance of the negative electrode plate, but also improve the utilization of the negative electrode active material, thereby increasing the energy density of the battery.

### <Positive electrode plate>

In the present disclosure, a ratio of a length of the first carbon nanotube to the depth of the recess may range from 0.03 : 1 to 4 : 1, for example, 0.03 : 1, 0.05 : 1, 0.1 : 1, 0.2 : 1, 0.3 : 1, 0.4 : 1, 0.5 : 1, 0.6 : 1, 0.7 : 1, 0.8 : 1, 0.9 : 1, 1 : 1, 2 : 1, 3 : 1 or 4 : 1.

Provided that the ratio of the depth of the recess to the tube diameter of the first carbon nanotube is within a specific range, by controlling the length of the carbon nanotube in the positive electrode plate and the depth of the recess on the negative electrode plate, and making the ratio between the two meet a specific range, the problem of lithium plating on the negative electrode can be further improved while enabling the battery to have both energy density and fast charging capability. The reasons are as follows. The provision of a recess on a surface of the negative electrode plate can improve the infiltration of an electrolyte to the negative electrode active material near the negative electrode current collector, shorten the transport distance of lithium ions, improve the kinetic performance of the negative electrode plate, and thereby improve the intercalation speed of lithium ions into the negative electrode plate. Moreover, carbon nanotubes serve to enhance the conductivity in the positive electrode plate. Especially, the length of carbon nanotubes plays a crucial role in improving the conductivity, which can improve the kinetic performance of the positive electrode plate, thereby increasing the deintercalation speed of lithium ions from the positive electrode plate. If the ratio of the length of the carbon nanotubes in the positive electrode plate to the depth of the recess on the negative electrode plate is controlled, the two can produce an unexpected synergistic effect such that the kinetic performance of the positive electrode plate can be further matched to that of the negative electrode plate, that is, the speed at which lithium ions are deintercalated from the positive electrode plate matches the speed at which lithium ions are intercalated into the negative electrode plate, the fast charging capability of the battery is significantly improved, and the problem of lithium plating on the negative electrode is effectively improved.

In an embodiment, the ratio of the length of the first carbon nanotube to the depth of the recess ranges from 0.1 : 1 to 2 : 1.

In the present disclosure, the length of the first carbon nanotube can be obtained by conventional methods in the art, for example, by using SEM or TEM via a length measuring tool to measure the length of the carbon nanotube, for example, selecting at least 20 carbon nanotubes in a range of 100 µm × 100 µm, measuring the length of each carbon nanotube, and calculating the average.

In the present disclosure, the length of the first carbon nanotube may range from 0.2 µm to 32 µm, for example, 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm or 32 µm.

In an embodiment, the length of the first carbon nanotube ranges from 5 µm to 20 µm.

Provided that the ratio of the depth of the recess to the tube diameter of the first carbon nanotube is within a specific range, the length of the first carbon nanotube within a specific range can not only improve the overall conductivity of the battery, but also avoid increasing the risk of lithium plating on the negative electrode. When the length of the first carbon nanotube is too short (for example, less than 0.2 µm), the overall conductivity of the battery will be affected. When the length of the first carbon nanotube is too long (for example, greater than 32 µm), it will be broken during the preparation of a positive electrode active material layer slurry. The resulting broken surface will increase the risk of side reactions and affect the cycling capacity retention rate of the battery. In addition, too long length can cause the first carbon nanotubes to agglomerate, thus affecting the conductivity of the battery.

In the present disclosure, the first carbon nanotube may include at least one of a single-walled carbon nanotube and a multi-walled carbon nanotube.

In an embodiment, the first carbon nanotube includes a combination of the single-walled carbon nanotube and the multi-walled carbon nanotube.

In the first carbon nanotube, a mass ratio of the single-walled carbon nanotube to the multi-walled carbon nanotube may range from 1 : 5 to 1 : 15, for example, 1 : 5, 1 : 6, 1 : 7, 1 : 8, 1 : 9, 1 : 10, 1 : 11, 1 : 12, 1 : 13, 1 : 14 or 1 : 15.

In an embodiment, in the first carbon nanotube, the mass ratio of the single-walled carbon nanotube to the multi-walled carbon nanotube ranges from 1 : 6 to 1 : 10.

Provided that the ratio of the depth of the recess to the tube diameter of the first carbon nanotube is within a specific range, when the first carbon nanotube includes a combination of the single-walled carbon nanotube and the multi-walled carbon nanotube, it has a better effect than using the single-walled carbon nanotube alone or using the multi-walled carbon nanotube alone. The reasons are as follows. It has been found through extensive researches that single-walled carbon nanotubes have a much higher conductivity than multi-walled carbon nanotubes (the conductivity of a unit mass of single-walled carbon nanotubes is about 10 times that of multi-walled carbon nanotubes). However, when the amount of single-walled carbon nanotubes increases, they are more prone to aggregation, which prevents their conductivity from being fully utilized. Although the conductivity of multi-walled carbon nanotubes is relatively weak, it is far stronger than that of other conductive agents (such as conductive carbon black), and the dispersibility thereof is better. When the two are mixed, the easily dispersed multi-walled carbon nanotubes can break up the aggregated single-walled carbon nanotubes, so that the two interact together, resulting in good dispersion and an excellent conductive network. Therefore, using a mixture of the two and controlling the proportion can achieve unexpected synergistic effects. The inventors of the present disclosure have further found that single-walled carbon nanotubes are more electrically conductive than multi-walled carbon nanotubes, but single-walled carbon nanotubes are more prone to gas production. By controlling the mass ratio of single-walled carbon nanotubes to multi-walled carbon nanotubes, the conductivity of the battery can be significantly improved without affecting the cycling performance of the battery.

In the present disclosure, the positive electrode plate may include a positive electrode current collector, and a positive electrode active material layer on a surface of at least one side of the positive electrode current collector. The positive electrode active material layer may include a positive electrode active material, a positive electrode conductive agent and a positive electrode binder.

The positive electrode conductive agent may include the first carbon nanotube. Based on a total weight of the positive electrode conductive agent, a content of the first carbon nanotube may range from 0.1% to 30%, for example, 0.1%, 0.2%, 0.3%, 0.4%, 0.5%, 0.6%, 0.7%, 0.8%, 0.9%, 1%, 5%, 10%, 15%, 20%, 25% or 30%.

In an embodiment, based on the total weight of the positive electrode conductive agent, the content of the first carbon nanotube ranges from 9% to 18%.

In an embodiment, based on the total weight of the positive electrode conductive agent, the content of the first carbon nanotube ranges from 10% to 15%.

Provided that the ratio of the depth of the recess to the tube diameter of the first carbon nanotube is within a specific range, the first carbon nanotube in the positive electrode conductive agent has a specific mass content, and within this range, the positive electrode plate has superior conductivity. When the content of the first carbon nanotube is too low (for example, less than 0.1%), after dispersion, there is no conductive agent on and near the surface of some of the positive electrode active material, which makes the conductive network of the entire positive electrode plate incomplete, thereby reducing the conductivity thereof, which is not conducive to the improvement of the conductivity of the battery. When the content of the first carbon nanotube is too high (for example, greater than 30%), the conductive agent will agglomerate, resulting in incomplete dispersion, which will also affect the improvement of the conductivity of the battery.

In the present disclosure, the positive electrode conductive agent may further include at least one of conductive carbon black, acetylene black, Ketjen black, conductive graphite and carbon fibres.

In an embodiment, the positive electrode conductive agent includes the conductive carbon black and the first carbon nanotube.

In the present disclosure, the positive electrode active material may include at least one of lithium cobalt oxide, lithium nickel cobalt manganese oxide, lithium nickel cobalt aluminum oxide, lithium nickel cobalt manganese aluminum oxide, lithium manganese oxide, lithium nickel manganese oxide, lithium nickel oxide, lithium iron phosphate, lithium manganese iron phosphate, lithium vanadium phosphate, and lithium-rich manganese-based materials. The positive electrode binder may include at least one of polyvinylidene fluoride, sodium carboxymethyl cellulose, styrene-butadiene rubber, polytetrafluoroethylene, polyacrylic acid, and polyethylene oxide.

In the present disclosure, based on a total weight of the positive electrode active material layer, a content of the positive electrode active material may range from 80% to 99.8% (for example, 80%, 85%, 90%, 95% or 99.8%), a content of the positive electrode conductive agent may range from 0.1% to 10% (for example, 10%, 7.5%, 5%, 2.5% or 0.1%), and a content of the positive electrode binder may range from 0.1% to 10% (for example, 10%, 7.5%, 5%, 2.5% or 0.1%).

In an embodiment, based on the total weight of the positive electrode active material layer, the content of the positive electrode active material ranges from 90% to 99%, the content of the positive electrode conductive agent ranges from 1% to 5%, and the content of the positive electrode binder ranges from 1% to 5%.

### <Negative electrode plate>

In the present disclosure, the negative electrode plate may include a negative electrode current collector, and a negative electrode active material layer on a surface of at least one side of the negative electrode current collector, where the recess may be located on a surface of the negative electrode active material layer.

In the present disclosure, the recess extends in a direction proximate to the negative electrode current collector.

In the present disclosure, the negative electrode active material layer may include a negative electrode active material. The negative electrode active material may include at least one of a carbon-based material and a silicon-based material. The carbon-based material may include at least one of artificial graphite, natural graphite, mesocarbon microbeads, hard carbon and soft carbon. The silicon-based material may include at least one of a silicon, a silicon-oxygen, a silicon-carbon and a silicon alloy.

In the present disclosure, the terms "silicon-oxygen" and "silicon-carbon" have their conventional meanings in the art, and the term "silicon-oxygen" is generally considered to refer to an oxide of silicon. The term "silicon-carbon" refers to a silicon-carbon composite material.

In an embodiment, the silicon-carbon includes a material formed by filling (including partially filling or completely filling) the pores of porous amorphous carbon or porous crystalline carbon with silicon or partially oxidized silicon.

In an embodiment, the silicon-carbon includes a material formed by coating carbon onto the surface of silicon or partially oxidized silicon. Specific silicon-based materials can suppress battery expansion to some extent.

In an embodiment, the negative electrode active material includes the carbon-based material.

In an embodiment, the negative electrode active material includes the carbon-based material and the silicon-based material.

Negative electrode plates (especially silicon-doped negative electrodes) undergo volume expansion/contraction during battery charge/discharge cycles, leading to battery deformation and decreased conductivity. The inventors of the present disclosure have found that, provided that the ratio of the depth of the recess to the tube diameter of the first carbon nanotube is within a specific range, by providing a recess in the negative electrode active material layer, the volume expansion of the negative electrode active material can be effectively mitigated, and the effect is especially more obvious for the volume expansion of the silicon-based material. The recess provides space for the expansion of the negative electrode active material, transforming some of the vertical expansion thereof into horizontal expansion, thereby improving the battery expansion and deformation.

In the present disclosure, based on a total weight of the negative electrode active material, a content of the silicon-based material may range from 1% to 65%, for example, 1%, 2%, 3%, 4%, 5%, 6%, 7%, 8%, 9%, 10%, 15%, 20%, 25%, 30%, 35%, 40%, 45%, 50%, 55%, 60% or 65%.

In an embodiment, based on the total weight of the negative electrode active material, the content of the silicon-based material ranges from 3% to 45%.

Provided that the ratio of the depth of the recess to the tube diameter of the first carbon nanotube is within a specific range, when the mass content of the silicon-based material in the negative electrode active material is within a specific range, the areal capacity of the negative electrode plate can be increased, and the amount of the negative electrode active material in the negative electrode plate can be reduced, thereby reducing the thickness of the negative electrode plate, improving the utilization of the negative electrode active material, further reducing the lithium ion transport path, and thus improving the kinetic performance and energy density of the lithium-ion battery.

In the present disclosure, the negative electrode active material layer may further include a negative electrode conductive agent. The negative electrode conductive agent may include a second carbon nanotube.

Provided that the ratio of the depth of the recess to the tube diameter of the first carbon nanotube is within a specific range, when the negative electrode conductive agent includes carbon nanotubes, the conductivity of the silicon-containing negative electrode plate can be increased and the expansion of the silicon-containing negative electrode plate can be further suppressed. The reasons are as follows. The silicon-based material itself is less conductive. In addition, after volume expansion/contraction, the structure is damaged, and voids are generated on the surface of the silicon-based material, thus affecting its electrical contact with the negative electrode conductive agent and further deteriorating the conductivity of the negative electrode plate. Moreover, when the negative electrode conductive agent includes carbon nanotubes, firstly, the excellent conductivity of carbon nanotubes can compensate for the poor conductivity of silicon-based materials and enhance the reactivity of silicon-based materials. Secondly, carbon nanotubes have a tubular structure and a certain degree of toughness, and the tubular structure thereof can overlap with each other to form an elastic conductive network on the surface of silicon-based materials. This conductive network can not only enhance the conductivity of silicon-based materials and suppress the volume expansion of silicon-based materials to a certain extent, but also reduce the voids caused by the volume expansion/contraction of silicon-based materials due to the elasticity of the conductive network, thereby further enhancing the conductivity of the negative electrode plate. Finally, because carbon nanotubes have a certain capillary effect, they can store electrolyte. The conductive network formed thereby can significantly improve the infiltration of the electrolyte to the negative electrode plate, increase the transport speed of lithium ions, and enable lithium ions to be uniformly intercalated into the silicon-based material, avoiding lithium plating caused by uneven lithium intercalation.

In the present disclosure, a length of the second carbon nanotube may range from 0.2 µm to 32 µm, for example, 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm or 32 µm.

In an embodiment, the length of the second carbon nanotube ranges from 10 µm to 20 µm.

Provided that the ratio of the depth of the recess to the tube diameter of the first carbon nanotube is within a specific range, the length of the second carbon nanotube within a specific range can not only improve the conductivity of the negative electrode plate, but also further improve the lithium plating problem. When the length of the second carbon nanotube is too short (for example, less than 0.2 µm), it cannot form an effective conductive network on the surface of the silicon-based material, which will affect the conductivity of the negative electrode plate and the suppression of the volume expansion of the silicon-based material. When the length of the second carbon nanotube is too long (for example, greater than 32 µm), it will affect the toughness of the conductive network formed thereby, thereby affecting its ability to suppress the volume expansion of silicon-based materials. In addition, too long length can cause the second carbon nanotubes to agglomerate, thus failing to form an effective conductive network, which also affects the conductivity of the negative electrode plate and the suppression of volume expansion of silicon-based materials.

In the present disclosure, the length of the second carbon nanotube can be obtained by conventional methods in the art, for example, by using SEM or TEM via a length measuring tool to measure the length of the carbon nanotube, for example, selecting at least 20 carbon nanotubes in a range of 100 µm × 100 µm, measuring the length of each carbon nanotube, and calculating the average.

In the present disclosure, a tube diameter of the second carbon nanotube may range from 2 nm to 25 nm, for example, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm or 25 nm.

In an embodiment, the tube diameter of the second carbon nanotube ranges from 5 nm to 18 nm.

Provided that the ratio of the depth of the recess to the tube diameter of the first carbon nanotube is within a specific range, the tube diameter of the second carbon nanotube has a greater impact on the toughness of the conductive network formed thereby. When it is within a specific range, the formed conductive network has a stronger toughness and better elasticity, which can effectively suppress the expansion of silicon-based materials and reduce the voids formed on the surface of silicon-based materials due to volume expansion/contraction, thereby improving the conductivity of the negative electrode plate.

In the present disclosure, the tube diameter of the second carbon nanotube refers to the outer tube diameter of the second carbon nanotube, which can be obtained by conventional methods in the art, for example, by using SEM or TEM via a length measuring tool to measure the outer tube diameter of the carbon nanotube, for example, selecting at least 20 carbon nanotubes in a range of 100 µm × 100 µm, measuring the outer tube diameter of each carbon nanotube, and calculating the average.

In the present disclosure, a ratio of the depth of the recess to the tube diameter of the second carbon nanotube may range from 400 : 1 to 5000 : 1, for example, 400 : 1, 500 : 1, 600 : 1, 700 : 1, 800 : 1, 900 : 1, 1000 : 1, 1500 : 1, 2000 : 1, 2500 : 1, 3000 : 1, 3500 : 1, 4000 : 1, 4500 : 1 or 5000 : 1.

In an embodiment, the ratio of the depth of the recess to the tube diameter of the second carbon nanotube ranges from 800 :1 to 1670 : 1.

Provided that the ratio of the depth of the recess to the tube diameter of the first carbon nanotube is within a specific range, when the depth of the recess and the tube diameter of the second carbon nanotube satisfy the above relationship, the kinetic performance of the negative electrode plate can be further improved, especially when the negative electrode plate includes a silicon-based material. This may be because the provision of a recess on the negative electrode plate prevents lithium ions deintercalated from the positive electrode plate from accumulating on the surface of the negative electrode plate. Instead, the lithium ions quickly migrate to the negative electrode active material near the negative electrode current collector through the recess. They can also quickly intercalate into the active material on the inner wall of the recess through the inner wall of the recess. However, silicon-based materials have relatively weak conductivity. In order to improve their lithium intercalation speed and uniformity, it is necessary to control the depth of the recess and the tube diameter of the second carbon nanotube within a certain range.

In the present disclosure, a ratio of the length of the second carbon nanotube to the depth of the recess may range from 0.03 : 1 to 3 : 1, for example, 0.03 : 1, 0.05 : 1, 0.1 : 1, 0.2 : 1, 0.3 : 1, 0.4 : 1, 0.5 : 1, 0.6 : 1, 0.7 : 1, 0.8 : 1, 0.9 : 1, 1 : 1, 2 : 1 or 3 : 1.

In an embodiment, the ratio of the length of the second carbon nanotube to the depth of the recess ranges from 0.3 : 1 to 1.5 : 1.

Provided that the ratio of the depth of the recess to the tube diameter of the first carbon nanotube is within a specific range, when the length of the second carbon nanotube and the depth of the recess satisfy the above relationship, the ability to suppress the expansion of silicon-based materials can be further improved. This may be because the provision of a recess on the negative electrode plate prevents lithium ions deintercalated from the positive electrode plate from accumulating on the surface of the negative electrode plate, but instead the lithium ions migrate into the negative electrode active material through the recess. Therefore, the depth of the recess is related to the position of lithium ions intercalated into the negative electrode active material layer, and the position of lithium ions intercalated into the negative electrode active material layer and the length of the carbon nanotube have a significant impact on the expansion of silicon-based materials. Therefore, in order to improve the uniformity of lithium intercalation and minimize the expansion of the silicon-based material as possible, it is necessary to control the length of the second carbon nanotube and the depth of the recess within a certain range.

In the present disclosure, the shortest distance from the silicon-based material located below the recess to a straight line parallel to the negative electrode current collector passing through a bottom end of the recess ranges from 3 µm to 15 µm.

In the present disclosure, the "silicon-based material located below the recess" refers to silicon-based material particles in the following region: the region extends upward to the straight line parallel to the negative electrode current collector passing through the bottom end of the recess, downward to the negative electrode current collector, leftward to the perpendicular line from the leftmost point of the projection of the recess onto the surface of the negative electrode plate to the negative electrode current collector, and rightward to the perpendicular line from the rightmost point of the projection of the recess onto the surface of the negative electrode plate to the negative electrode current collector.

When the shortest distance from the silicon-based material particle located below the recess to the straight line parallel to the negative electrode current collector passing through the bottom end of the recess ranges from 3 µm to 15 µm, it can suppress the expansion of silicon-based material particles, improve the penetration ability of lithium ions between the positive and negative electrodes, improve the conductivity, and effectively prevent the extension and breakage of the negative electrode current collector, thereby improving the safety performance of the battery.

In the present disclosure, the second carbon nanotube may include at least one of the single-walled carbon nanotube and the multi-walled carbon nanotube.

In an embodiment, the second carbon nanotube includes a combination of the single-walled carbon nanotube and the multi-walled carbon nanotube.

In the second carbon nanotube, a mass ratio of the single-walled carbon nanotube to the multi-walled carbon nanotube may range from 1 : 5 to 1 : 15, for example, 1 : 5, 1 : 6, 1 : 7, 1 : 8, 1 : 9, 1 : 10, 1 : 11, 1 : 12, 1 : 13, 1 : 14 or 1 : 15.

In an embodiment, in the second carbon nanotube, the mass ratio of the single-walled carbon nanotube to the multi-walled carbon nanotube ranges from 1 : 6 to 1 : 10.

Provided that the ratio of the depth of the recess to the tube diameter of the first carbon nanotube is within a specific range, when the second carbon nanotube includes a combination of the single-walled carbon nanotube and the multi-walled carbon nanotube, it has a better effect than using the single-walled carbon nanotube alone or using the multi-walled carbon nanotube alone. The reasons are as follows. Single-walled carbon nanotubes have better conductivity than multi-walled carbon nanotubes. However, when the amount of single-walled carbon nanotubes increases, they are more prone to aggregation, which prevents their conductivity from being fully utilized. Although the conductivity of multi-walled carbon nanotubes is relatively weak, it is far stronger than that of other conductive agents (such as conductive carbon black), and the dispersibility thereof is better. When the two are mixed, the easily dispersed multi-walled carbon nanotubes can break up the aggregated single-walled carbon nanotubes, so that the two interact together, resulting in good dispersion and an excellent conductive network. Therefore, using a mixture of the two and controlling the proportion can achieve unexpected synergistic effects. The inventors of the present disclosure have further found that single-walled carbon nanotubes are more electrically conductive than multi-walled carbon nanotubes, but single-walled carbon nanotubes are more prone to gas production. By controlling the mass ratio of single-walled carbon nanotubes to multi-walled carbon nanotubes, the conductivity of the battery can be significantly improved without affecting the cycling performance of the battery.

In the present disclosure, the negative electrode conductive agent may further include the conductive carbon black. A mass ratio of the conductive carbon black to the second carbon nanotube may range from 5 : 1 to 10 : 1, for example, 5 : 1, 6 : 1, 7 : 1, 8 : 1, 9 : 1 or 10 : 1.

In an embodiment, the mass ratio of the conductive carbon black to the second carbon nanotube ranges from 6 : 1 to 8.5 : 1.

Provided that the ratio of the depth of the recess to the tube diameter of the first carbon nanotube is within a specific range, when the negative electrode conductive agent includes conductive carbon black and the second carbon nanotube, and the mass ratio therebetween is within a specific range, the conductivity of the negative electrode plate can be improved. The reason for this may be: conductive carbon black has a point-like conductive distribution, while carbon nanotubes have a linear conductive distribution. The combination of the two (point-line combination) has a long-range conductive effect, which can significantly improve the conductivity of materials with weaker conductivity, especially silicon-based materials. In addition, the surface of the negative electrode plate has a recess. When the silicon-based material is located on the inner wall of the recess, because a part of the silicon-based material is exposed, the electrical contact of this part is disrupted, and the conductivity thereof becomes worse. In this case, the improvement of its conductivity by a conductive agent with a long-range conductivity is very significant.

In the present disclosure, the negative electrode active material layer may further include a negative electrode binder and a thickener. The negative electrode binder may include at least one of polyvinylidene fluoride, styrene-butadiene rubber, polyacrylic acid, polytetrafluoroethylene and polyethylene oxide. The thickener may include at least one of carboxymethyl cellulose, sodium carboxymethyl cellulose, and lithium carboxymethyl cellulose.

Based on a total weight of the negative electrode active material layer, a content of the negative electrode active material may range from 70% to 99.7% (for example, 70%, 73%, 76%, 79%, 82%, 85%, 88%, 91%, 94%, 97% or 99.7%), a content of the negative electrode conductive agent may range from 0.1% to 10% (for example, 10%, 9%, 8%, 7%, 6%, 5%, 4%, 3%, 2%, 1% or 0.1%), a content of the negative electrode binder may range from 0.1% to 10% (for example, 10%, 9%, 8%, 7%, 6%, 5%, 4%, 3%, 2%, 1% or 0.1%), and a content of the thicker may range from 0.1% to 10% (for example, 10%, 9%, 8%, 7%, 6%, 5%, 4%, 3%, 2%, 1% or 0.1%).

In an embodiment, based on the total weight of the negative electrode active material layer, a content of the negative electrode active material ranges from 88% to 99%, the content of the negative electrode conductive agent ranges from 0.2% to 2.5%, the content of the negative electrode binder ranges from 0.4% to 5%, and the content of the thicker ranges from 0.4% to 4.5%.

In an embodiment, based on the total weight of the negative electrode active material layer, the content of the negative electrode active material ranges from 94% to 98.7%, the content of the negative electrode conductive agent ranges from 0.3% to 1.8%, the content of the negative electrode binder ranges from 0.5% to 2.5%, and the content of the thicker ranges from 0.5% to 1.7%.

In the present disclosure, the negative electrode active material layer may include N coating layers, where N ≥ 1 (for example, N = 1, 2, 3, 4, 5, 6, 7 or 8).

In the present disclosure, the expression "the negative electrode active material layer includes N coating layers" refers to the number of the negative electrode active material layers on one side of the negative electrode current collector.

When N = 1, the number of the negative electrode active material layers on one side of the negative electrode current collector is 1.

When N = 2, the number of the negative electrode active material layers on one side of the negative electrode current collector is 2. In this case, the two negative electrode active material layers are the first negative electrode active material layer and the second negative electrode active material layer. The first negative electrode active material layer and the second negative electrode active material layer are stacked in the thickness direction of the negative electrode plate. The slurries forming the first negative electrode active material layer and the second negative electrode active material layer may be the same or different. When the slurries forming the first negative electrode active material layer and the second negative electrode active material layer are different, there is no particular limitation on their composition, as long as the mass content of the silicon-based material in the negative electrode active material described above is satisfied. In this case, the silicon-based material may be present only in the first negative electrode active material layer, only in the second negative electrode active material layer, or in both the first negative electrode active material layer and the second negative electrode active material layer. The ratio of the thickness of the first negative electrode active material layer to the thickness of the second negative electrode active material layer is 1 : (0.5-4), for example, 1 : 0.5, 1 : 1, 1 : 2, 1 : 3 or 1 : 4.

In an embodiment, the negative electrode active material layer is a single layer.

In an embodiment, the negative electrode active material layer includes a first negative electrode active material layer and a second negative electrode active material layer stacked sequentially along the thickness direction of the negative electrode plate.

In an example, the negative electrode active material layer includes a first negative electrode active material layer, a second negative electrode active material layer, and a third negative electrode active material layer stacked sequentially along the thickness direction of the negative electrode plate.

In the present disclosure, an areal density of the negative electrode plate may range from 7 mg/cm² to 22 mg/cm², for example, 7 mg/cm², 10 mg/cm², 15 mg/cm², 20 mg/cm² or 22 mg/cm².

Provided that the ratio of the depth of the recess to the tube diameter of the first carbon nanotube is within a specific range, when the areal density of the negative electrode plate is within a specific range, the ability of the negative electrode plate to receive lithium ions can be improved. Meanwhile, by providing a recess on the outer surface of the negative electrode plate, the lithium ion transport distance can be shortened, and the intercalation speed of lithium ions into the negative electrode plate can be increased, thereby further improving the charging speed of the battery and reducing the risk of lithium plating.

In the present disclosure, a thickness of the negative electrode active material layer ranges from 35 µm to 100 µm, for example, 35 µm, 40 µm, 45 µm, 50 µm, 55 µm, 60 µm, 65 µm, 70 µm, 75 µm, 80 µm, 85 µm, 90 µm, 95 µm or 100 µm.

Provided that the ratio of the depth of the recess to the tube diameter of the first carbon nanotube is within a specific range, when the thickness of the negative electrode plate is within a specific range, and a recess is provided on the outer surface of the negative electrode plate, it is possible to shorten the lithium ion transport distance, increase the intercalation speed of lithium ions into the negative electrode plate, and reduce the occurrence of lithium plating while increasing the energy density of the battery.

In the present disclosure, the thickness of the negative electrode active material layer refers to the thickness of the negative electrode active coating layer on one side of the negative electrode current collector.

### <recess>

In the present disclosure, the recess may include a pore and/or a groove.

In the present disclosure, a pore size of the pore may range from 20 µm to 150 µm, for example, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 110 µm, 120 µm, 130 µm, 140 µm or 150 µm.

In an embodiment, the pore size of the pore ranges from 35 µm to 90 µm.

Provided that the ratio of the depth of the recess to the tube diameter of the first carbon nanotube is within a specific range, when the pore size of the pore is within a specific range, the adhesion between the negative electrode surface and a separator can not be affected. If the pore size is too large, the adhesion between the area and the separator will be relatively weak, and lithium plating may easily occur due to poor interfacial adhesion. If the pore size is too small, it will not be able to absorb electrolyte and quickly accommodate lithium ions, which may also lead to lithium plating.

In the present disclosure, a spacing between the pores may range from 50 µm to 1000 µm, for example, 50 µm, 60 µm, 70 µm, 80 µm, 90 µm, 100 µm, 200 µm, 300 µm, 400 µm, 500 µm, 600 µm, 700 µm, 800 µm, 900 µm or 1000 µm.

In an embodiment, the spacing between the pores ranges from 150 µm to 450 µm.

Provided that the ratio of the depth of the recess to the tube diameter of the first carbon nanotube is within a specific range, when the spacing between the pores is small, the weight loss of the negative electrode plate increases, resulting in more compensation thickness and leading to an excessively thick battery and increased energy density loss. When the spacing between the pores is relatively large, it is not conducive to the rapid dispersion of lithium ions and the rapid intercalation of lithium ions into adjacent pores, leading to lithium plating.

In the present disclosure, the pore size of the pore and spacing between the pores have the conventional meanings in the art. With regard to the pore size of the pore, when the shape of the projection of the pore onto the negative electrode active material layer is a "regular circle", the pore size of the pore is generally considered to be the diameter of the regular circle. When the shape of the projection of the pore onto the negative electrode active material layer is an "irregular circle" (for example, an ellipse or an irregular curve polygon), the pore size of the pore is the diameter of an equivalent circle with an area equal to that of the "irregular circle". The spacing between the pores refers to the shortest distance between the edges of two adjacent pores on the negative electrode active material layer.

In the present disclosure, the pore size of the pore can be obtained by conventional means in the art, for example, by SEM, randomly selecting 50 pores on the entire negative electrode plate, measuring the pore size of each pore and calculating the average. The spacing between the pores can be obtained by conventional means in the art, for example, by SEM, randomly selecting 50 adjacent pores on the entire negative electrode plate, measuring the spacing between each pair of adjacent pores and calculating the average.

In the present disclosure, a width of the groove may range from 35 µm to 185 µm, for example, 35 µm, 40 µm, 45 µm, 50 µm, 55 µm, 60 µm, 65 µm, 70 µm, 75 µm, 80 µm, 85 µm, 90 µm, 95 µm, 100 µm, 110 µm, 120 µm, 130 µm, 140 µm, 150 µm, 160 µm, 170 µm, 180 µm or 185 µm.

In an embodiment, the width of the groove ranges from 40 µm to 100 µm.

Provided that the ratio of the depth of the recess to the tube diameter of the first carbon nanotube is within a specific range, when the width of the groove is within a specific range, the adhesion between the negative electrode surface and a separator can not be affected. If the width of the groove is too large, the adhesion between the area and the separator will be relatively weak, and lithium plating may easily occur due to poor interfacial adhesion. If the width of the groove is too small, it will not be able to absorb the electrolyte and quickly accommodate lithium ions, which may also lead to lithium plating.

In the present disclosure, a spacing between the grooves may range from 0.1 mm to 3 mm, for example, 0.1 mm, 0.2 mm, 0.3 mm, 0.4 mm, 0.5 mm, 0.6 mm, 0.7 mm, 0.8 mm, 0.9 mm, 1 mm, 1.5 mm, 2 mm, 2.5 mm or 3 mm.

In an embodiment, the spacing between the grooves ranges from 0.5 mm to 2 mm.

Provided that the ratio of the depth of the recess to the tube diameter of the first carbon nanotube is within a specific range, when the spacing between the grooves is small, the weight loss of the negative electrode plate increases, resulting in more compensation thickness and leading to an excessively thick battery and increased energy density loss. When the spacing between the grooves is relatively large, it is not conducive to the rapid dispersion of lithium ions and the rapid intercalation of lithium ions into adjacent grooves, leading to lithium plating.

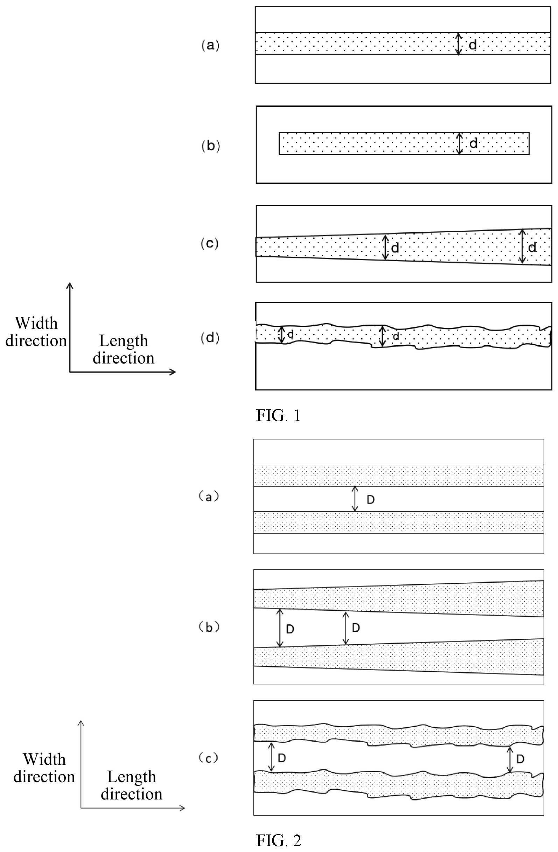

In the present disclosure, the width of the groove and spacing between the grooves have the conventional meanings in the art. With regard to the width of the groove, it is generally considered that the projection of the groove onto the negative electrode active material layer includes two long sides. The width of the groove refers to the average distance from one long side to the other long side in the length direction or width direction of the negative electrode plate. FIG. 1 is a schematic view of the width of a groove in an example of the present disclosure, where in FIGs. 1(a) - 1(c), two long sides of the groove are straight lines, and in FIG. 1(d), two long sides of the groove are curved lines. In FIGs. 1(a) and 1(b), the two long sides are arranged in parallel, and therefore, in the width direction of the negative electrode plate, the distance d from any point on one long side to the other long side is identical. In this case, the width of the groove is the distance from any point on one long side to the other long side in the length direction or width direction of the negative electrode plate. In FIG. 1(c), the two long sides of the groove are straight lines, but are not arranged in parallel. Therefore, the distance d from any point on one long side to the other long side is not identical. In this case, the width of the groove can be an average value. That is to say, on one long side, based on the length of the side, 50 points are selected at equal distance (that is, the inter-point distance is identical, and selecting points in this way can make the calculation result more accurate), the width corresponding to each point is measured, and the average value is calculated to obtain the width of the groove. In FIG. 1(d), the two long sides are curved lines. Therefore, the distance d from any point on one long side to the other long side is not identical. In this case, the width of the groove can also be an average value. That is to say, 50 points are randomly selected on one long side (since the two long sides in FIG. 1(d) are curved lines, the relationship between the two long sides in FIG. 1(c) does not exist, and therefore, 50 points can be randomly selected for measurement), the width corresponding to each point is measured, and the average value is calculated to obtain the width of the groove. The spacing between the grooves is generally considered to be the average distance between the two adjacent long sides of two adjacent grooves on the negative electrode active material layer in the length direction or width direction of the negative electrode plate. FIG. 2 is a schematic view of the spacing between the grooves in an example of the present disclosure, where FIG. 2(a) shows the case where two adjacent long sides are straight and parallel, FIG. 2(b) shows the case where two adjacent long sides are straight and non-parallel, and FIG. 2(c) shows the case where two adjacent long sides are curved. In FIG. 2(a), two adjacent long sides are straight lines and arranged in parallel, and therefore, in the width direction, the distance from any point on one long side to the other long side is identical. In this case, the spacing between the grooves is the distance D from any point on one long side to the other long side in the width direction. In FIG. 2(b), two adjacent long sides are straight lines, but are not arranged in parallel. Therefore, the distance from any point on one long side to the other long side is not identical. In this case, the spacing between the grooves may be an average value. That is to say, on one long side, based on the length of the side, 50 points are selected at equal distance (that is, the inter-point distance is identical, and selecting points in this way can make the calculation result more accurate), the width corresponding to each point is measured, and the average value is calculated to obtain the spacing. In FIG. 2(c), two adjacent long sides are curved lines. Therefore, the distance from any point on one long side to the other long side is not identical. In this case, the spacing between the grooves may also be an average value. That is to say, 50 points are randomly selected on one long side (since the two long sides in FIG. 2(c) are curved lines, the relationship between the two long sides in FIG. 2(b) does not exist, and therefore, 50 points can be randomly selected for measurement), the distance corresponding to each point is measured, and the average value is calculated to obtain the spacing.

In the present disclosure, the "width of the groove" can be obtained by conventional means in the art, for example, by SEM, selecting all the grooves on the entire negative electrode plate, measuring the width of each groove, and calculating the average value. The "spacing between the grooves" can be obtained by conventional means in the art, for example, by SEM, selecting all the grooves on the entire negative electrode plate, measuring the spacing between two adjacent grooves, and taking the minimum value.

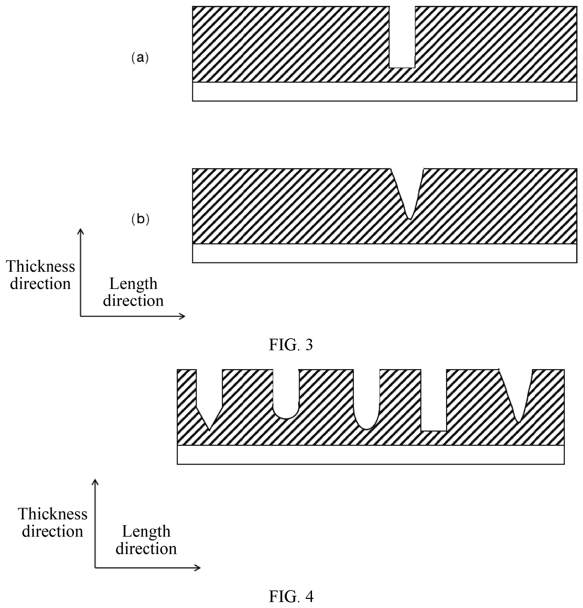

In the present disclosure, the morphology of the pore is not specifically limited. The pore may be a straight blind pore, that is, the projection of the pore onto the negative electrode plate is the same everywhere in the thickness direction of the negative electrode plate. The pore may also be a conical blind hole, that is, the pore size of the pore at the end away from the negative electrode current collector is larger than that at the end close to the negative electrode current collector. FIG. 3 is a schematic view of the morphology of a pore in an example of the present disclosure, where FIG. 3 (a) shows the case where the pore is a straight blind pore, and FIG. 3 (b) shows the case where the pore is a conical blind pore.

In the present disclosure, the morphology of the groove is not specifically limited. The shape of the cross section of the groove along the thickness direction of the negative electrode plate may be rectangular or conical. FIG. 4 is a schematic view of a groove in an example of the present disclosure. It can be seen from FIG. 4 that the shape of the cross section of the groove in the thickness direction of the negative electrode plate may be rectangular or conical. In the present disclosure, the grooves can be distributed along the length direction of the negative electrode plate or along the width direction of the negative electrode plate.

In the present disclosure, a perpendicular distance from the bottom of the recess to the negative electrode current collector is greater than 0 µm. When the perpendicular distance from the bottom of the recess to the negative electrode current collector is greater than 0, damage to the negative electrode current collector can be avoided, thus not affecting the electrochemical performance of the battery.

In the present disclosure, the components (for example, a separator and an electrolyte) of the battery in addition to the positive electrode plate and the negative electrode plate can all be common choices in the art.

In an embodiment, the lithium-ion battery further includes a separator and an electrolyte.

In the present disclosure, the separator may include separators conventionally used in the art, for example, at least one of polyethylene films and polypropylene films.

In the present disclosure, the electrolyte may include a lithium salt and an organic solvent. The lithium salt may include at least one of lithium hexafluorophosphate, lithium difluorophosphate, lithium difluorobis(oxalato)phosphate, lithium tetrafluoro(oxalato)phosphate, lithium (oxalato)phosphate, lithium bis(oxalato)borate, lithium difluoro(oxalato)borate, lithium tetrafluoroborate, lithium bis(trifluorosulfonyl)imide, and lithium bis(fluorosulfonyl)imide. The organic solvent may include at least one of propylene carbonate (PC), ethylene carbonate (EC), dimethyl carbonate (DMC) and ethyl methyl carbonate (EMC).

The electrolyte may further include an additive, which may include at least one of fluoroethylene carbonate, vinylene carbonate, vinyl sulfate, methylene methanedisulfonate, propene sulfolactone, and succinic anhydride.

In the present disclosure, the battery can be assembled in accordance with conventional methods in the art.

In an embodiment, the battery includes a lithium-ion battery.

The battery of the present disclosure has excellent cycling life and cycling expansion rate, and can significantly improve the lithium plating problem.

It should be noted that the numerical representations of "first", "second", etc., in the present disclosure are merely used to distinguish different substances or modes of use rather than indicating an order.

The present disclosure will be described in detail below by means of examples. The examples described in the present disclosure are only some, rather than all, of the examples of the present disclosure. Based on the examples of the present disclosure, all other examples obtained by those of ordinary skill in the art without creative efforts fall within the scope of protection of the present disclosure.

In the following examples, unless otherwise specified, all the materials used are commercially available and analytically pure.

The following examples are used to illustrate the battery of the present disclosure.

### Example 1

A battery was prepared according to the following steps:

### (1) Preparation of negative electrode plate

Negative electrode active materials (artificial graphite and silicon (II) oxide with a mass ratio of artificial graphite to silicon (II) oxide of 85 : 15), negative electrode conductive agents (conductive carbon black and carbon nanotubes (with the mass ratio of single-wall carbon nanotubes to multi-wall carbon nanotubes being 1 : 9), where the mass ratio of conductive carbon black to carbon nanotubes was 7 : 1, and the carbon nanotubes had a tube diameter of 12 nm and a length of 13 µm), styrene-butadiene rubber and sodium carboxymethylcellulose were mixed in a mass ratio of 96.9 : 0.5 : 1.3 : 1.3 until uniform, deionized water was added and the resulting mixture was passed through a 150 mesh screen to obtain a negative electrode slurry with a solids content of 45%; and the above negative electrode slurry was coated onto a copper foil by means of a coater, and dried at 100°C, and grooves were created on the outer surface of the negative electrode active material layer, where the grooves had a depth of 10 µm and a width of 50 µm, and the spacing between the grooves was 1 mm, to obtain a negative electrode plate, where the width of the negative electrode plate was 65 mm.

### (2) Preparation of positive electrode plate

Lithium cobalt oxide, positive electrode conductive agents (conductive carbon black and carbon nanotubes (with the mass ratio of single-wall carbon nanotubes to multi-wall carbon nanotubes being 1 : 9), where the mass ratio of conductive carbon black to carbon nanotubes was 7 : 1, and the carbon nanotubes had a tube diameter of 16 nm and a length of 20 µm) and polyvinylidene fluoride were mixed in a mass ratio of 97.2 : 1.5 : 1.3 until uniform, N-methylpyrrolidone (NMP) was added and the resulting mixture was passed through a 200 mesh screen to obtain a positive electrode slurry with a solids content of 72%; and the above positive electrode slurry was coated onto an aluminum foil by means of a coater and dried at 120°C to obtain a positive electrode plate, where the width of the positive electrode plate was 63 mm.

### (3) Preparation of lithium-ion battery

The negative electrode plate obtained in step (1), the positive electrode plate obtained in step (2), and a separator (a polyethylene film with a thickness of 9 µm) were wound to form a wound core, and packaged with an aluminum plastic film; and after baking to remove moisture, an electrolyte (propylene carbonate, ethylene carbonate, dimethyl carbonate and ethyl methyl carbonate were mixed in a weight ratio of 1 : 1 : 0.5 : 1, 1 mol/L of LiPF₆ was added and mixed until uniform) was injected, followed by hot-pressing and formation to obtain a battery.

### Example 2

This example was carried out with reference to Example 1, except for the following specific differences in steps (1) and (2):

### (1) Preparation of negative electrode plate

Negative electrode active materials (artificial graphite and silicon (II) oxide with a mass ratio of artificial graphite to silicon (II) oxide of 85 : 15), negative electrode conductive agents (conductive carbon black and carbon nanotubes (with the mass ratio of single-wall carbon nanotubes to multi-wall carbon nanotubes being 1 : 8), where the mass ratio of conductive carbon black to carbon nanotubes was 8 : 1, and the carbon nanotubes had a tube diameter of 15 nm and a length of 20 µm), styrene-butadiene rubber and sodium carboxymethylcellulose were mixed in a mass ratio of 96.9 : 0.5 : 1.3 : 1.3 until uniform, deionized water was added and the resulting mixture was passed through a 150 mesh screen to obtain a negative electrode slurry with a solids content of 45%; and the above negative electrode slurry was coated onto a copper foil by means of a coater, and dried at 100°C, and grooves were created on the outer surface of the negative electrode active material layer, where the grooves had a depth of 20 µm and a width of 95 µm, and the spacing between the grooves was 1 mm, to obtain a negative electrode plate, where the width of the negative electrode plate was 65 mm.

### (2) Preparation of positive electrode plate

Lithium cobalt oxide, positive electrode conductive agents (conductive carbon black and carbon nanotubes (with the mass ratio of single-wall carbon nanotubes to multi-wall carbon nanotubes being 1 : 8), where the mass ratio of conductive carbon black to carbon nanotubes was 8 : 1, and the carbon nanotubes had a tube diameter of 10 nm and a length of 10 µm) and polyvinylidene fluoride were mixed in a mass ratio of 97.2 : 1.5 : 1.3 until uniform, N-methylpyrrolidone (NMP) was added and the resulting mixture was passed through a 200 mesh screen to obtain a positive electrode slurry with a solids content of 72%; and the above positive electrode slurry was coated onto an aluminum foil by means of a coater and dried at 120°C to obtain a positive electrode plate, where the width of the positive electrode plate was 63 mm.

### Example 3

This example was carried out with reference to Example 1, except for the following specific differences in steps (1) and (2):

### (1) Preparation of negative electrode plate

Negative electrode active materials (artificial graphite and silicon (II) oxide with a mass ratio of artificial graphite to silicon (II) oxide of 85 : 15), negative electrode conductive agents (conductive carbon black and carbon nanotubes (with the mass ratio of single-wall carbon nanotubes to multi-wall carbon nanotubes being 1 : 10), where the mass ratio of conductive carbon black to carbon nanotubes was 6 : 1, and the carbon nanotubes had a tube diameter of 5 nm and a length of 12 µm), styrene-butadiene rubber and sodium carboxymethylcellulose were mixed in a mass ratio of 96.9 : 0.5 : 1.3 : 1.3 until uniform, deionized water was added and the resulting mixture was passed through a 150 mesh screen to obtain a negative electrode slurry with a solids content of 45%; and the above negative electrode slurry was coated onto a copper foil by means of a coater, and dried at 100°C, and grooves were created on the outer surface of the negative electrode active material layer, where the grooves had a depth of 8 µm and a width of 40 µm, and the spacing between the grooves was 1 mm, to obtain a negative electrode plate, where the width of the negative electrode plate was 65 mm.

### (2) Preparation of positive electrode plate

Lithium cobalt oxide, positive electrode conductive agents (conductive carbon black and carbon nanotubes (with the mass ratio of single-wall carbon nanotubes to multi-wall carbon nanotubes being 1 : 10), where the mass ratio of conductive carbon black to carbon nanotubes was 6 : 1, and the carbon nanotubes had a tube diameter of 6 nm and a length of 12 µm) and polyvinylidene fluoride were mixed in a mass ratio of 97.2 : 1.5 : 1.3 until uniform, N-methylpyrrolidone (NMP) was added and the resulting mixture was passed through a 200 mesh screen to obtain a positive electrode slurry with a solids content of 72%; and the above positive electrode slurry was coated onto an aluminum foil by means of a coater and dried at 120°C to obtain a positive electrode plate, where the width of the positive electrode plate was 63 mm.

### Example 4

This example was carried out with reference to Example 1, except for the following specific differences in steps (1) and (2):

### (1) Preparation of negative electrode plate

Negative electrode active materials (artificial graphite and silicon (II) oxide with a mass ratio of artificial graphite to silicon (II) oxide of 85 : 15), negative electrode conductive agents (conductive carbon black and carbon nanotubes (with the mass ratio of single-wall carbon nanotubes to multi-wall carbon nanotubes being 1 : 6), where the mass ratio of conductive carbon black to carbon nanotubes was 8.5 : 1, and the carbon nanotubes had a tube diameter of 18 nm and a length of 10 µm), styrene-butadiene rubber and sodium carboxymethylcellulose were mixed in a mass ratio of 96.9 : 0.5 : 1.3 : 1.3 until uniform, deionized water was added and the resulting mixture was passed through a 150 mesh screen to obtain a negative electrode slurry with a solids content of 45%; and the above negative electrode slurry was coated onto a copper foil by means of a coater, and dried at 100°C, and grooves were created on the outer surface of the negative electrode active material layer, where the grooves had a depth of 26 µm and a width of 99 µm, and the spacing between the grooves was 1 mm, to obtain a negative electrode plate, where the width of the negative electrode plate was 65 mm.

### (2) Preparation of positive electrode plate

Lithium cobalt oxide, positive electrode conductive agents (conductive carbon black and carbon nanotubes (with the mass ratio of single-wall carbon nanotubes to multi-wall carbon nanotubes being 1 : 6), where the mass ratio of conductive carbon black to carbon nanotubes was 8.5 : 1, and the carbon nanotubes had a tube diameter of 15 nm and a length of 5 µm) and polyvinylidene fluoride were mixed in a mass ratio of 97.2 : 1.5 : 1.3 until uniform, N-methylpyrrolidone (NMP) was added and the resulting mixture was passed through a 200 mesh screen to obtain a positive electrode slurry with a solids content of 72%; and the above positive electrode slurry was coated onto an aluminum foil by means of a coater and dried at 120°C to obtain a positive electrode plate, where the width of the positive electrode plate was 63 mm.

### Example 5 group

This example group was carried out with reference to Example 1, except that the ratio of the depth of the recess to the tube diameter of the first carbon nanotube was changed by changing the tube diameter of the first carbon nanotube, specifically as follows:
in Example 5a, the first carbon nanotube had a tube diameter of 10 nm and a length of 20 µm;
in Example 5b, the first carbon nanotube had a tube diameter of 6 nm and a length of 20 µm;
in Example 5c, the first carbon nanotube had a tube diameter of 2 nm and a length of 20 µm;
and in Example 5d, the first carbon nanotube had a tube diameter of 20 nm and a length of 20 µm.

### Example 6 group

Example 6a was carried out with reference to Example 2, except that the ratio of the depth of the recess to the tube diameter of the first carbon nanotube was changed by changing the tube diameter of the first carbon nanotube, i.e. the first carbon nanotube had a tube diameter of 6 nm and a length of 10 µm.

Example 6b was carried out with reference to Example 3, except that the ratio of the depth of the recess to the tube diameter of the first carbon nanotube was changed by changing the tube diameter of the first carbon nanotube, i.e. the first carbon nanotube had a tube diameter of 16 nm and a length of 12 µm.

### Example 7 group

This example group was carried out with reference to Example 1, except that parameters of the groove were changed, specifically as follows:
in Example 7a, the groove had a depth of 5 µm and a width of 35 µm, and the spacing between grooves was 1 mm; and
in Example 7b, the groove had a depth of 40 µm and a width of 170 µm, and the spacing between grooves was 1 mm.

### Example 8 group

This example group was carried out with reference to Example 1, except that the ratio of the depth of the recess to the length of the first carbon nanotube was changed by changing the length of the first carbon nanotube, specifically as follows:
in Example 8a, the first carbon nanotube had a tube diameter of 16 nm and a length of 10 µm;
in Example 8b, the first carbon nanotube had a tube diameter of 16 nm and a length of 5 µm;
in Example 8c, the first carbon nanotube had a tube diameter of 16 nm and a length of 30 µm;
and in Example 8d, the first carbon nanotube had a tube diameter of 16 nm and a length of 0.5 µm.

### Example 9 group

This example group was carried out with reference to Example 1, except that the mass content of the first carbon nanotube in the positive electrode conductive agent was changed, specifically as follows:
in Example 9a, the positive electrode conductive agent was a combination of conductive carbon black and carbon nanotubes, where the carbon nanotubes were a mixture of single-walled carbon nanotubes and multi-walled carbon nanotubes in a mass ratio of 1 : 9, and the mass ratio of conductive carbon black to carbon nanotubes was 5 : 1; and
in Example 9b, the positive electrode conductive agent was a combination of conductive carbon black and carbon nanotubes, where the carbon nanotubes were a mixture of single-walled carbon nanotubes and multi-walled carbon nanotubes in a mass ratio of 1 : 9, and the mass ratio of conductive carbon black to carbon nanotubes was 10 : 1.

### Example 10 group

This example group was carried out with reference to Example 1, except that the negative electrode active material was changed, specifically as follows:
in Example 10a, the negative electrode active material was artificial graphite;
in Example 10b, the negative electrode active materials were artificial graphite and silicon (II) oxide, where the mass ratio of artificial graphite to silicon (II) oxide was 95 : 5;
in Example 10c, the negative electrode active materials were artificial graphite and silicon (II) oxide, where the mass ratio of artificial graphite to silicon (II) oxide was 60 : 40;
in Example 10d, the negative electrode active materials were artificial graphite and silicon (II) oxide, where the mass ratio of artificial graphite to silicon (II) oxide was 99 : 1; and
in Example 10e, the negative electrode active materials were artificial graphite and silicon (II) oxide, where the mass ratio of artificial graphite to silicon (II) oxide was 40 : 60.

### Example 11

This example was carried out with reference to Example 1, except that the negative electrode conductive agent was changed, specifically as follows: the negative electrode conductive agent was conductive carbon black.

### Example 12 group

This example group was carried out with reference to Example 1, except that the ratio of the depth of the recess to the tube diameter of the second carbon nanotube was changed by changing the tube diameter of the second carbon nanotube, specifically as follows:
in Example 12a, the second carbon nanotube had a tube diameter of 5 nm and a length of 13 µm;
in Example 12b, the second carbon nanotube had a tube diameter of 18 nm and a length of 13 µm;
in Example 12c, the second carbon nanotube had a tube diameter of 2 nm and a length of 13 µm;
and in Example 12d, the second carbon nanotube had a tube diameter of 25 nm and a length of 13 µm.

### Example 13 group

This example group was carried out with reference to Example 1, except that the ratio of the length of the second carbon nanotube to the depth of the recess was changed by changing the length of the second carbon nanotube, specifically as follows:
in Example 13a, the second carbon nanotube had a tube diameter of 12 nm and a length of 10 µm;
in Example 13b, the second carbon nanotube had a tube diameter of 12 nm and a length of 20 µm;
in Example 13c, the second carbon nanotube had a tube diameter of 12 nm and a length of 0.5 µm;
and in Example 13d, the second carbon nanotube had a tube diameter of 12 nm and a length of 30 µm.

### Example 14 group

This example group was carried out with reference to Examples 1-4, except that pores were made on the outer surface of the negative electrode active material layer, specifically as follows:
Example 14a was carried out with reference to Example 1, except that the pore had a depth of 10 µm and a pore size of 45 µm, and the spacing between the pores was 200 µm;
Example 14b was carried out with reference to Example 2, except that the pore had a depth of 20 µm and a pore size of 87 µm, and the spacing between the pores was 200 µm;
Example 14c was carried out with reference to Example 3, except that the pore had a depth of 8 µm and a pore size of 35 µm, and the spacing between the pores was 200 µm; and
Example 14d was carried out with reference to Example 4, except that the pore had a depth of 26 µm and a pore size of 90 µm, and the spacing between the pores was 200 µm.

### Example 15

This example was carried out with reference to Example 1, except that the preparation process for the negative electrode plate was adjusted to control the shortest distance from the silicon-based particle located below the recess to the straight line parallel to the negative electrode current collector passing through the bottom end of the recess to be 3 µm-15 µm, specifically as follows: the coating speed of a negative electrode slurry was controlled to be 5 m/min-7 m/min while the negative electrode plate was dried in stages; within a range of 10 m of the negative electrode plate entering an oven, the negative electrode plate was baked at 60°C-80°C for curing same; and within a range of 20 m-30 m, the negative electrode plate was baked at 80°C-110°C, and the silicon-based particles at the bottom to float upwards along with the binder; and finally, the temperature drops sharply to 50°C within a range of 10 m outside the oven for plasticizing and fixing same.

### Example 16

This example was carried out with reference to Example 1, except that silicon (II) oxide was replaced with the same mass of a silicon-carbon material (in which the carbon content was approximately 13%).

### Comparative example 1

This comparative example was carried out with reference to Example 1, except that the first carbon nanotube was changed, specifically as follows: the first carbon nanotube had a tube diameter of 35 nm and a length of 20 µm.

### Comparative example 2

This comparative example was carried out with reference to Example 1, except that the first carbon nanotube was changed, specifically as follows: the first carbon nanotube had a tube diameter of 1.5 nm and a length of 20 µm.

The parameters in Examples 1-16 and Comparative examples 1-2 were detailed in Table 1. In the above examples of the present disclosure, the negative electrode plate had an areal density of 7 mg/cm²-22 mg/cm², and the negative electrode active material layer had a thickness of 35 µm-100 µm.

**Table 1**

| | Ratio of depth of recess to tube diameter of first carbon nanotube | Ratio of length of first carbon nanotube to depth of recess | Ratio of depth of recess to tube diameter of second carbon nanotube | Ratio of length of second carbon nanotube to depth of recess |
|---|---|---|---|---|
| Example 1 | 625 : 1 | 2 : 1 | 833 : 1 | 1.3 : 1 |
| Example 2 | 2000 : 1 | 0.5 : 1 | 1333 : 1 | 1 : 1 |
| Example 3 | 1333 : 1 | 1.5 : 1 | 1600 : 1 | 1.5 : 1 |
| Example 4 | 1733 : 1 | 0.19 : 1 | 1444 : 1 | 0.38 : 1 |
| Example 5a | 1000 : 1 | 2 : 1 | 833 : 1 | 1.3 : 1 |
| Example 5b | 1667 : 1 | 2 : 1 | 833 : 1 | 1.3 : 1 |
| Example 5c | 5000 : 1 | 2 : 1 | 833 : 1 | 1.3 : 1 |
| Example 5d | 500 : 1 | 2 : 1 | 833 : 1 | 1.3 : 1 |
| Example 6a | 3333 : 1 | 0.5 : 1 | 1333 : 1 | 1 : 1 |
| Example 6b | 500 : 1 | 1.5 : 1 | 1600 : 1 | 1.5 : 1 |
| Example 7a | 313 : 1 | 4 : 1 | 417 : 1 | 2.6 : 1 |
| Example 7b | 2500 : 1 | 0.5 : 1 | 3333 : 1 | 0.3 : 1 |
| Example 8a | 625 : 1 | 1 : 1 | 833 : 1 | 1.3 : 1 |
| Example 8b | 625 : 1 | 0.5 : 1 | 833 : 1 | 1.3 : 1 |
| Example 8c | 625 : 1 | 3 : 1 | 833 : 1 | 1.3 : 1 |
| Example 8d | 625 : 1 | 0.05 : 1 | 833 : 1 | 1.3 : 1 |
| Example 9a | 625 : 1 | 2 : 1 | 833 : 1 | 1.3 : 1 |
| Example 9b | 625 : 1 | 2 : 1 | 833 : 1 | 1.3 : 1 |
| Example 10a | 625 : 1 | 2 : 1 | 833 : 1 | 1.3 : 1 |
| Example 10b | 625 : 1 | 2 : 1 | 833 : 1 | 1.3 : 1 |
| Example 10c | 625 : 1 | 2 : 1 | 833 : 1 | 1.3 : 1 |
| Example 10d | 625 : 1 | 2 : 1 | 833 : 1 | 1.3 : 1 |
| Example 10e | 625 : 1 | 2 : 1 | 833 : 1 | 1.3 : 1 |
| Example 11 | 625 : 1 | 2 : 1 | / | / |
| Example 12a | 625 : 1 | 2 : 1 | 2000 : 1 | 1.3 : 1 |
| Example 12b | 625 : 1 | 2 : 1 | 556 : 1 | 1.3 : 1 |
| Example 12c | 625 : 1 | 2 : 1 | 5000 : 1 | 1.3 : 1 |
| Example 12d | 625 : 1 | 2 : 1 | 4001 : | 1.3 : 1 |
| Example 13a | 625 : 1 | 2 : 1 | 833 : 1 | 1 : 1 |
| Example 13b | 625 : 1 | 2 : 1 | 833 : 1 | 2 : 1 |
| Example 13c | 625 : 1 | 2 : 1 | 833 : 1 | 0.05 : 1 |
| Example 13d | 625 : 1 | 2 : 1 | 833 : 1 | 3 : 1 |
| Example 14a | 625 : 1 | 2 : 1 | 833 : 1 | 1.3 : 1 |
| Example 14b | 2000 : 1 | 0.5 : 1 | 1333 : 1 | 1 : 1 |
| Example 14c | 1333 : 1 | 1.5 : 1 | 1600 : 1 | 1.5 : 1 |
| Example 14d | 1733 : 1 | 0.19 : 1 | 1444 : 1 | 0.38 : 1 |
| Example 15 | 625 : 1 | 2 : 1 | 833 : 1 | 1.3 : 1 |
| Example 16 | 625 : 1 | 2 : 1 | 833 : 1 | 1.3 : 1 |
| Comparative example 1 | 286 : 1 | 2 : 1 | 833 : 1 | 1.3 : 1 |
| Comparative example 2 | 6667 : 1 | 2 : 1 | 833 : 1 | 1.3 : 1 |

### Test examples

### (1) Energy density test

The batteries prepared in the examples and comparative examples were subjected to an energy density test, and the specific method was as follows: the discharge capacity of the batteries was tested by 0.5C constant current constant voltage charging/0.2C discharging at 25°C, with energy density = discharge capacity × average voltage / (thickness × width × height). The test results are recorded in Table 2.

### (2) Test of cycling capacity retention rate

The batteries prepared in examples and comparative examples were subjected to a cycling capacity retention rate test, and the specific method was as follows: the battery was subjected to a cycle test of 2C charge to 4.5V followed by 0.05C/1C discharge to 3.0V at a test temperature of 25°C for 800T cycles. The test results are recorded in Table 2.

### (3) Test of expansion rate

The batteries prepared in the examples and comparative examples were subjected to an expansion rate test, and the specific method was as follows: referring to the test method for cycling capacity retention rate, a PPG thickness tester was used to test the thickness at the first full charge and the thickness at the full charge after 800T cycles, with expansion rate = (thickness at full charge after 800T cycles - thickness at first full charge) / thickness at first full charge. The results are recorded in Table 2.

### (4) Lithium plating test

The batteries prepared in examples and comparative examples were subjected to a normal-temperature lithium plating test, and the specific method was as follows: at 25°C, a charging process was as follows: first, charge at a constant current of 4C to 4.48V, then charge at the constant voltage until the current drops to 0.05C; a discharging process was as follows: discharge to 3.0V at a constant current of 1C; finally change at 0.3C until fully charged; and after repeating 20 cycles, the battery was disassembled to observe the lithium plating on the negative electrode plate. The results are recorded in Table 2, in which the degree of lithium plating is listed from light to severe as no lithium plating, slight lithium plating, lithium plating, and severe lithium plating.

**Table 2**

| | Energy density Wh/L | Cycling capacity retention rate % | Expansion rate % | Situation of lithium plating |
|---|---|---|---|---|
| Example 1 | 752 | 85.39 | 15.23 | No lithium plating |
| Example 2 | 749 | 87.35 | 14.87 | No lithium plating |
| Example 3 | 754 | 82.19 | 16.59 | No lithium plating |
| Example 4 | 747 | 84.35 | 15.52 | No lithium plating |
| Example 5a | 752 | 85.66 | 15.03 | No lithium plating |
| Example 5b | 753 | 84.99 | 15.51 | No lithium plating |
| Example 5c | 752 | 81.35 | 17.32 | Slight lithium plating |
| Example 5d | 751 | 82.51 | 16.88 | Slight lithium plating |
| Example 6a | 748 | 83.76 | 16.86 | Slight lithium plating |
| Example 6b | 753 | 82.58 | 16.5 | No lithium plating |
| Example 7a | 755 | 80.59 | 17.89 | Slight lithium plating |
| Example 7b | 742 | 84.33 | 15.77 | No lithium plating |
| Example 8a | 753 | 85.37 | 15.36 | No lithium plating |
| Example 8b | 752 | 84.96 | 15.87 | No lithium plating |
| Example 8c | 751 | 82.12 | 17.79 | Slight lithium plating |
| Example 8d | 751 | 87.89 | 14.35 | No lithium plating |
| Example 9a | 751 | 82.59 | 17.82 | Slight lithium plating |
| Example 9b | 752 | 79.27 | 18.23 | Lithium plating |
| Example 10a | 740 | 87.23 | 10.89 | No lithium plating |
| Example 10b | 744 | 86.98 | 15.53 | No lithium plating |
| Example 10c | 769 | 83.77 | 16.32 | Slight lithium plating |
| Example 10d | 741 | 86.55 | 12.09 | No lithium plating |
| Example 10e | 780 | 78.35 | 20.57 | Slight lithium plating |
| Example 11 | 751 | 82.55 | 19.45 | Lithium plating |
| Example 12a | 751 | 82.95 | 17.25 | Slight lithium plating |
| Example 12b | 752 | 83.04 | 17.64 | Slight lithium plating |
| Example 12c | 752 | 80.26 | 19.26 | Lithium plating |
| Example 12d | 751 | 80.54 | 19.78 | Lithium plating |
| Example 13a | 753 | 85.57 | 15.15 | No lithium plating |
| Example 13b | 752 | 83.04 | 17.44 | Slight lithium plating |
| Example 13c | 751 | 81.23 | 19.62 | Lithium plating |
| Example 13d | 752 | 80.99 | 20.33 | Lithium plating |
| Example 14a | 760 | 84.96 | 15.93 | No lithium plating |
| Example 14b | 758 | 86.54 | 15.06 | No lithium plating |
| Example 14c | 763 | 82.15 | 16.43 | No lithium plating |
| Example 14d | 754 | 84.56 | 15.94 | No lithium plating |
| Example 15 | 753 | 86.35 | 14.76 | No lithium plating |
| Example 16 | 750 | 84.57 | 15.38 | No lithium plating |
| Comparative example 1 | 751 | 70.53 | 25.64 | Severe lithium plating |
| Comparative example 2 | 751 | 68.34 | 25.98 | Severe lithium plating |

As can be seen from Table 2, the batteries of the present disclosure have a higher cycling capacity retention rate, lower expansion rate and better situation of lithium plating compared to those of the comparative examples.

By comparing Example 5 group with Example 1, and Example 6a with Example 2, it can be seen that when the ratio of the depth of the recess to the tube diameter of the first carbon nanotube is (600-2050) : 1, the cycling capacity retention rate can be increased, and the expansion and lithium plating of the battery can be improved.

By comparing Example 6b with Example 3, it can be seen that the cycling capacity retention rate, expansion rate and lithium plating are similar, but the charging speed of Example 6b is slower compared to that of Example 3.

By comparing Example 7a with Example 1, it can be seen that the depth of the recess becomes smaller, the energy density is higher than that of Example 1, and the cycling capacity retention rate, expansion rate and lithium plating are worse than those in Example 1. By comparing Example 7b with Example 1, it can be seen that the depth of the recess becomes larger, the energy density is lower than that of Example 1, and the cycling capacity retention rate, expansion rate and lithium plating are similar to those in Example 1.

By comparing Example 8 group with Example 1, it can be seen that when the ratio of the length of the first carbon nanotube to the depth of the recess is (0.1-2) : 1, the cycling capacity retention rate can be increased, and the expansion and lithium plating of the battery can be improved. The battery charging speed of Example 8d is slower compared to that of Example 1.

By comparing Example 9 group with Example 1, it can be seen that the first carbon nanotube in the positive electrode conductive agent has a specific mass content, and within this range, the positive electrode plate has better conductivity properties; therefore, the content has a larger impact on the cycling capacity retention rate, expansion rate and lithium plating of the battery.

By comparing Example 11 with Example 1, it can be seen that the expansion of a silicon-containing negative electrode plate can be further suppressed when the negative electrode conductive agent includes carbon nanotubes.

By comparing Example 12 group with Example 1, it can be seen that when the ratio of the depth of the recess to the tube diameter of the second carbon nanotube satisfies (800-1670) : 1, the cycling capacity retention rate can be increased, and the expansion and lithium plating of the battery can be improved.

By comparing Example 13 group with Example 1, it can be seen that when the ratio of the length of the second carbon nanotube to the depth of the recess satisfies (0.3-1.5) : 1, the cycling capacity retention rate can be increased, and the expansion and lithium plating of the battery can be improved.

By comparing Example 15 with Example 1, it can be seen that the expansion of the silicon-based particles can be suppressed when the shortest distance from the silicon-based particle located below the recess to the straight line parallel to the negative electrode current collector passing through the bottom end of the recess is 3 µm-15 µm.

The preferred embodiments of the present disclosure have been described in detail above; however, the present disclosure is not limited thereto. Within the technical concept of the present disclosure, various simple modifications can be made to the technical solution of the present disclosure, including the combinations of various technical features in any other suitable way. These simple modifications and combinations should also be regarded as the content disclosed by the present disclosure and all fall within the scope of protection of the present disclosure.

## Claims

1. A battery, **characterized by** comprising a positive electrode plate and a negative electrode plate, wherein the positive electrode plate comprises a first carbon nanotube, a surface of the negative electrode plate has a recess, and a ratio of a depth of the recess to a tube diameter of the first carbon nanotube ranges from 300 :1 to 5000 : 1.

2. The battery according to claim 1, **characterized in that** the ratio of the depth of the recess to the tube diameter of the first carbon nanotube ranges from 600 :1 to 2050 : 1.

3. The battery according to claim 1 or 2, **characterized in that** the tube diameter of the first carbon nanotube ranges from 2 nm to 20 nm;
preferably, the tube diameter of the first carbon nanotube ranges from 6 nm to 16 nm.

4. The battery according to any one of claims 1-3, **characterized in that** the depth of the recess ranges from 5 µm to 65 µm;
preferably, the depth of the recess ranges from 8 µm to 30 µm.

5. The battery according to any one of claims 1-4, **characterized in that** a ratio of a length of the first carbon nanotube to the depth of the recess ranges from 0.03 : 1 to 4 : 1;
preferably, the ratio of the length of the first carbon nanotube to the depth of the recess ranges from 0.1 : 1 to 2 : 1.

6. The battery according to any one of claims 1-5, **characterized in that** a length of the first carbon nanotube ranges from 0.2 µm to 32 µm;
preferably, the length of the first carbon nanotube ranges from 5 µm to 20 µm.

7. The battery according to any one of claims 1-6, **characterized in that** the first carbon nanotube comprises at least one of a single-walled carbon nanotube and a multi-walled carbon nanotube;
preferably, the first carbon nanotube comprises a combination of the single-walled carbon nanotube and the multi-walled carbon nanotube;
more preferably, in the first carbon nanotube, a mass ratio of the single-walled carbon nanotube to the multi-walled carbon nanotube ranges from 1 : 5 to 1 : 15;
further preferably, the mass ratio of the single-walled carbon nanotube to the multi-walled carbon nanotube ranges from 1 : 6 to 1 : 10.

8. The battery according to any one of claims 1-7, **characterized in that** the positive electrode plate comprises a positive electrode conductive agent, wherein the positive electrode conductive agent comprises the first carbon nanotube; and based on a total weight of the positive electrode conductive agent, a content of the first carbon nanotube ranges from 0.1% to 30%;
preferably, based on the total weight of the positive electrode conductive agent, the content of the first carbon nanotube ranges from10% to 15%;
preferably, the positive electrode conductive agent further comprises at least one of conductive carbon black, acetylene black, Ketjen black, conductive graphite and carbon fibres;
more preferably, the positive electrode conductive agent comprises the conductive carbon black and the first carbon nanotube.

9. The battery according to any one of claims 1-8, **characterized in that** the negative electrode plate comprises a negative electrode current collector, and a negative electrode active material layer on a surface of at least one side of the negative electrode current collector, wherein the recess is located on a surface of the negative electrode active material layer; the negative electrode active material layer comprises a negative electrode active material, and the negative electrode active material comprises at least one of a carbon-based material and a silicon-based material;
preferably, the negative electrode active material comprises the carbon-based material and the silicon-based material, and based on a total weight of the negative electrode active material, a content of the silicon-based material ranges from 1% to 65%;
more preferably, based on the total weight of the negative electrode active material, the content of the silicon-based material ranges from 3% to 45%, ;
preferably, the silicon-based material comprises at least one of a silicon-carbon, a silicon-oxygen, a silicon and a silicon alloy;
preferably, the carbon-based material comprises at least one of artificial graphite, natural graphite, mesocarbon microbeads, hard carbon and soft carbon.

10. The battery according to claim 9, **characterized in that** the negative electrode active material layer further comprises a negative electrode conductive agent, and the negative electrode conductive agent comprises a second carbon nanotube;
preferably, a ratio of the depth of the recess to a tube diameter of the second carbon nanotube ranges from 400 : 1 to 5000 : 1;
more preferably, the ratio of the depth of the recess to the tube diameter of the second carbon nanotube ranges from 800 :1 to 1670 : 1.

11. The battery according to claim 10, **characterized in that** a ratio of a length of the second carbon nanotube to the depth of the recess ranges from 0.03 : 1 to 3 : 1;
preferably, the ratio of the length of the second carbon nanotube to the depth of the recess ranges from 0.3 : 1 to 1.5 : 1;
preferably, the length of the second carbon nanotube ranges from 0.2 µm to 32 µm; more preferably, the length of the second carbon nanotube ranges from 10 µm to 20 µm;
preferably, the tube diameter of the second carbon nanotube ranges from 2 nm to 25 nm; more preferably, the tube diameter of the second carbon nanotube ranges from 5 nm to 18 nm.

12. The battery according to claim 10 or 11, **characterized in that** the negative electrode conductive agent further comprises the conductive carbon black;
preferably, a mass ratio of the conductive carbon black to the second carbon nanotube ranges from 5 : 1 to 10 : 1; more preferably, the mass ratio of the conductive carbon black to the second carbon nanotube ranges from 6 : 1 to 8.5 : 1.

13. The battery according to any one of claims 10-12, **characterized in that** the second carbon nanotube comprises at least one of a single-walled carbon nanotube and a multi-walled carbon nanotube;
preferably, the second carbon nanotube comprises a combination of the single-walled carbon nanotube and the multi-walled carbon nanotube;
more preferably, in the second carbon nanotube, a mass ratio of the single-walled carbon nanotube to the multi-walled carbon nanotube ranges from 1 : 5 to 1 : 15;
further preferably, the mass ratio of the single-walled carbon nanotube to the multi-walled carbon nanotube ranges from 1 : 6 to 1 : 10.

14. The battery according to any one of claims 1-13, **characterized in that** the recess comprises a pore and/or a groove;
preferably, a pore size of the pore ranges from 20 µm to 150 µm; a spacing between the pores ranges from 50 µm to 1000 µm;
preferably, a width of the groove ranges from 35 µm to 185 µm; and a spacing between the grooves ranges from 0.1 mm to 3 mm.

15. The battery according to any one of claims 9-14, **characterized in that** the shortest distance from the silicon-based material located below the recess to a straight line parallel to the negative electrode current collector passing through a bottom end of the recess ranges from 3 µm to 15 µm;
preferably, a perpendicular distance from the bottom of the recess to the negative electrode current collector is greater than 0 µm;
preferably, an areal density of the negative electrode plate ranges from 7 mg/cm² to 22 mg/cm², and a thickness of the negative electrode active material layer ranges from 35 µm to 100 µm.
